(19) Europäisches Patentamt
European Patent Office
Office européen des brevets

(11) **EP 3 748 873 B1**

(12) **EUROPEAN PATENT SPECIFICATION**

(45) Date of publication and mention
of the grant of the patent:
**03.05.2023 Bulletin 2023/18**

(21) Application number: **18907838.9**

(22) Date of filing: **01.03.2018**

(51) International Patent Classification (IPC):
$H04B\ 10/118^{(2013.01)}$  $H04B\ 10/112^{(2013.01)}$
$H04B\ 10/61^{(2013.01)}$

(52) Cooperative Patent Classification (CPC):
**H04B 10/61; H04B 10/112; H04B 10/118**

(86) International application number:
**PCT/JP2018/007860**

(87) International publication number:
**WO 2019/167237 (06.09.2019 Gazette 2019/36)**

(54) **SPATIAL OPTICAL COMMUNICATION RECEIVER**

RÄUMLICHER OPTISCHER KOMMUNIKATIONSEMPFÄNGER

RÉCEPTEUR DE COMMUNICATION OPTIQUE SPATIALE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.12.2020 Bulletin 2020/50**

(73) Proprietor: **Mitsubishi Electric Corporation
Tokyo 100-8310 (JP)**

(72) Inventors:
• **MATSUDA, Keisuke
Tokyo 100-8310 (JP)**
• **HARAGUCHI, Eisuke
Tokyo 100-8310 (JP)**

• **ANDO, Toshiyuki
Tokyo 100-8310 (JP)**

(74) Representative: **Pfenning, Meinig & Partner mbB
Patent- und Rechtsanwälte
An der Frauenkirche 20
01067 Dresden (DE)**

(56) References cited:
**WO-A1-2017/141854      JP-A- 2001 036 471
JP-A- 2001 036 471      JP-A- 2002 314 487
JP-A- 2013 535 871      JP-A- 2016 144 197
JP-A- 2017 152 773      US-A1- 2016 013 880**

**Description**

TECHNICAL FIELD

The present invention relates to a spatial optical communication receiver for performing spatial optical communication by mounting a transceiver on a moving object such as an aircraft or a satellite.

BACKGROUND ART

As a means for implementing large-capacity spatial communication, spatial optical communication is used using light in a wavelength band of 1.5 $\mu$m or 1.0 $\mu$m. In spatial optical communication, the wavelength of light as a carrier is shorter than that in conventional wireless communication, and downsizing can be expected of a transceiver including an optical antenna, that is, a telescope. In addition, since the beam diversity can be suppressed small and light can be transmitted efficiently, low power consumption can be expected.

In spatial optical communication, it is necessary to point the telescope at the corresponding transceiver, but when the transceiver is mounted on a moving object such as an aircraft or satellite, an error occurs in the pointing angle of the telescope, and optical coupling loss occurs. To address this problem, a pointing mirror is used for compensating for the angular error at high speed. To control the pointing mirror, a sensor is required for detecting the angular error of the optical signal incident on the telescope, and it is necessary to input light partially distributed from the received light, or beacon light having a wavelength different from that of the signal light to the sensor.

In addition, light propagated in the atmosphere is affected by the atmosphere, and the wavefront of the light is distorted. Considering the case of performing coherent detection, it is necessary to couple received light to a single mode fiber (SMF) that is an input port of a coherent receiver. When the wavefront is distorted, coupling loss occurs, and there is a problem that a signal-to-noise power ratio (SNR) is degraded. To solve the problem, it has been performed that distortion of the wavefront is detected by a wavefront sensor, and compensation for the wavefront distortion by a deformable mirror (DM) is performed (for example, see Non-Patent Literature 1). Patent Literature 1 discloses a spatial optical communication receiver with a multimode fiber, a reception optical system and a signal processing unit. Patent Literature 2 refers to a spatial division multiplexing photonic integrated circuit.

CITATION LIST

NON-PATENT LITERATURE

Non-Patent Literature 1: Malcolm W. Wright, et al., "Adaptive optics correction into single mode fiber for a low Earth orbiting space to ground optical communication link using the OPALS downlink," Optics Express Vol. 23, No. 26 pp33705-33712.
Patent Literature 1: WO 2017/141854 A1
Patent Literature 2: US 2016/013880 A1

SUMMARY OF INVENTION

TECHNICAL PROBLEM

However, when the beacon light having a wavelength different from that of the signal light is used as in the conventional technique, it is necessary to perform wavelength multiplexing of the beacon light in the transmitter, and there has been a problem that the configuration on the transmission side is complicated. In addition, a sensor for detecting the angular error is necessary in the reception side. Further, to detect the distortion of the wavefront with the wavefront sensor, it is necessary to use a beacon signal having a different wavelength from that of the signal light, and when the beacon light having a wavelength different from that of the signal light is used, it is necessary to perform wavelength multiplexing of the beacon light in the transmitter as described above, and there has been a problem that the configuration is inevitably complicated.

The present invention has been made to solve such problems, and aims to provide a spatial optical communication receiver enabled to suppress degradation of the signal-to-noise power ratio and complication of the configuration, and to perform stable spatial optical communication.

SOLUTION TO PROBLEM

A spatial optical communication receiver according to the present invention is set out in the appended set of claims and includes inter alia: a telescope for focusing a spatially propagated optical signal and outputting the optical signal collimated; a pointing mirror for compensating for an angle shift of the optical signal output from the telescope; a focusing optical system for focusing the optical signal from the pointing mirror; a multi-core fiber having a plurality of cores for transmitting the optical signal focused; a splitter for outputting optical signals of each core transmitted by the multi-core fiber through different single mode fibers for each core; coherent detectors for performing coherent detection on the optical signals from each single mode fiber; and a digital signal processing unit for decoding digital signals of the signals subjected to the coherent detection, in which the digital signal processing unit includes an adaptive equalizer for performing multi-input and single-output equalization, a phase compensation unit for compensating for a phase of a signal from the adaptive equalizer, a decoding unit for decoding the phase-compensated signal, a power monitor for outputting a monitored value of power corresponding to each of the cores, and an angle shift detecting unit for outputting an angle shift signal indicating a value of the angle shift of the optical signal input to the focusing optical system by using the monitored value, and the pointing mirror updates a compensation angle correspondingly to the angle shift signal.

ADVANTAGEOUS EFFECTS OF INVENTION

The spatial optical communication receiver according to the present invention performs coherent detection on the optical signal transmitted by using the multi-core fiber, and performs decoding with the digital signal processing unit. The digital signal processing unit detects the angle shift of the optical signal input to the focusing optical system, and the pointing mirror updates the compensation angle correspondingly to the angle shift, so that degradation of the signal-to-noise power ratio and complication of the configuration can be suppressed, and stable spatial optical communication can be performed.

BRIEF DESCRIPTION OF DRAWINGS

FIG. 1 is a configuration diagram of a spatial optical communication receiver of a first embodiment of the present invention.
FIG. 2 is a configuration diagram of a digital signal processing unit of the spatial optical communication receiver of the first embodiment of the present invention.
FIG. 3 is a hardware configuration diagram of the digital signal processing unit in the spatial optical communication receiver of the first embodiment of the present invention.
FIG. 4 is a flowchart illustrating operation of the spatial optical communication receiver of the first embodiment of the present invention.
FIG. 5 is a cross-sectional view of a multi-core fiber of the spatial optical communication receiver of the first embodiment of the present invention.
FIG. 6 is a configuration diagram of a spatial optical communication receiver of a second embodiment of the present invention.
FIG. 7 is a configuration diagram of a digital signal processing unit of the spatial optical communication receiver of the second embodiment of the present invention.
FIG. 8 is a flowchart illustrating operation of the spatial optical communication receiver of the second embodiment of the present invention.
FIG. 9 is a configuration diagram of a spatial optical communication receiver of a third embodiment of the present invention.
FIG. 10 is a configuration diagram of a wavefront compensation control unit of the spatial optical communication receiver of the third embodiment of the present invention.
FIG. 11 is a configuration diagram of a digital signal processing unit of the spatial optical communication receiver of the third embodiment of the present invention.
FIG. 12 is a flowchart illustrating operation of the spatial optical communication receiver of the third embodiment of the present invention.
FIG. 13 is a configuration diagram of a digital signal processing unit of a spatial optical communication receiver of a fourth embodiment of the present invention.
FIG. 14 is a flowchart illustrating operation of the spatial optical communication receiver of the fourth embodiment of the present invention.

DESCRIPTION OF EMBODIMENTS

Hereinafter, to explain the present invention in more detail, embodiments for carrying out the present invention will be described with reference to the accompanying drawings.

First Embodiment.

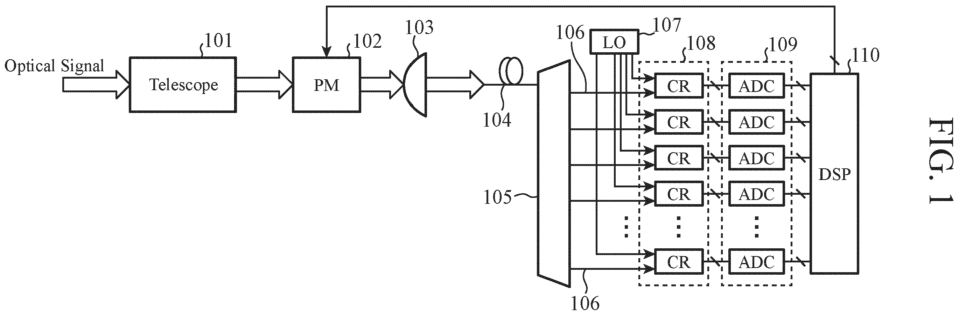

FIG. 1 is a configuration diagram illustrating a spatial optical communication receiver according to a first embodiment.

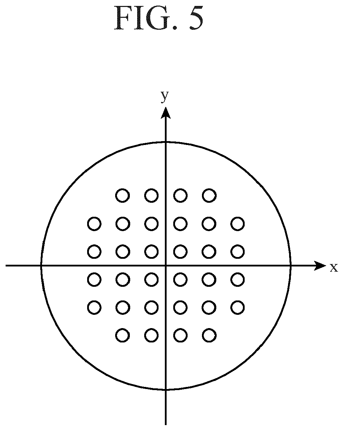

The illustrated spatial optical communication receiver includes a telescope 101, a pointing mirror (PM) 102, a focusing optical system 103, a multi-core fiber (MCF) 104, a splitter 105, single mode fibers (SMFs) 106, a local light source 107, coherent detectors 108, analog-to-digital converters (ADCs) 109, and a digital signal processing unit (digital signal processor (DSP)) 110. The telescope 101 is configured to focus an optical signal spatially propagated and output the optical signal collimated. The pointing mirror 102 is a mirror for compensating for an angle shift of the optical signal output from the telescope 101, and is configured to change an angle of output light by compensating for the angle shift with a signal of the angle shift detected by the digital signal processing unit 110 as an input. The focusing optical system 103 is an optical system for focusing the input collimated light near the incident end face of the multi-core fiber 104. The multi-core fiber 104 is an optical fiber having two or more cores for transmitting the optical signal focused by the focusing optical system 103, and the cores are arranged substantially uniformly in the cladding as illustrated in FIG. 5 described later, and their incident end faces are arranged to be positioned near the focal point of the focusing optical system 103.

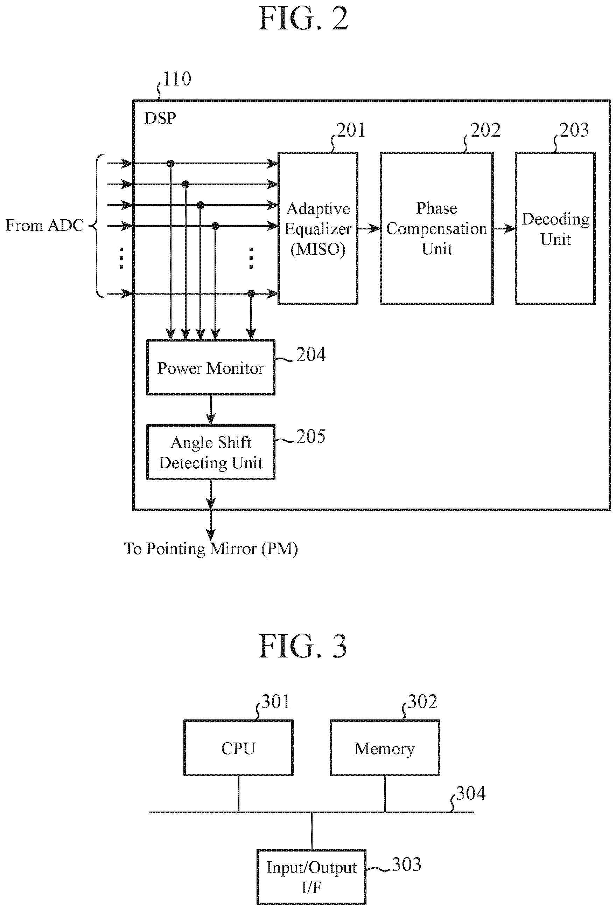

The splitter 105 is configured to split and output the optical signal propagated through the cores in the multi-core fiber 104 to each different single mode fiber 106. The single mode fibers 106 are single mode optical fibers. The local light source 107 is a light source for outputting the same optical signals to the coherent detectors 108. The plurality of coherent detectors 108 are provided respectively corresponding to the single mode fibers 106, and each is a detector for outputting an electric signal by performing coherent detection by causing the optical signal input through a corresponding one of the single mode fibers 106 to interfere with the optical signal from the local light source 107. The plurality of analog-to-digital converters 109 is provided respectively corresponding to the coherent detectors 108, and each converts an analog signal, which is an electric signal from a corresponding one of the coherent detectors 108, to a digital signal. The digital signal processing unit 110 is a processing unit for decoding the digital signal converted by each of the analog-to-digital converters 109, and its internal configuration is illustrated in FIG. 2.

In FIG. 2, the digital signal processing unit 110 includes an adaptive equalizer 201, a phase compensation unit 202, a decoding unit 203, a power monitor 204, and an angle shift detecting unit 205. The adaptive equalizer 201 is an adaptive equalizer for performing multi-input and single-output (MISO) equalization. The phase compensation unit 202 is a functional unit for compensating for a phase difference between a carrier of received light and local light. The decoding unit 203 is a functional unit for performing determination and decoding of a digital signal output from the phase compensation unit 202. The power monitor 204 is a circuit for monitoring power coupled to each of the cores from a corresponding one of the analog-to-digital converters 109 and outputs a monitored value. The angle shift detecting unit 205 is a detector for detecting the angle shift of the optical signal input to the focusing optical system 103 from the monitored value output from the power monitor 204, and is configured to output a detection result to the pointing mirror 102.

In addition, the units from the adaptive equalizer 201 to the angle shift detecting unit 205 in the digital signal processing unit 110 each may be a dedicated hardware, or may be configured by using a central processing unit (CPU) (note that, also referred to as a central processing device, a processing device, an arithmetic device, a microprocessor, a microcomputer, or a processor) for executing a program stored in a memory.

When the units from the adaptive equalizer 201 to the angle shift detecting unit 205 each are the dedicated hardware, examples thereof include a single circuit, a composite circuit, a programmed processor, a parallel-programmed processor, an ASIC, an FPGA, or a combination thereof. The units from the adaptive equalizer 201 to the angle shift detecting unit 205 each may be implemented by a specific processing circuit, or functions of each unit may be collectively implemented by a processing circuit.

When the units from the adaptive equalizer 201 to the angle shift detecting unit 205 are implemented by using the CPU, these functional units are implemented by software, firmware, or a combination of software and firmware. FIG. 3 illustrates a hardware configuration of the case of being implemented by using the CPU.

The illustrated circuit includes a CPU 301, a memory 302, an input/output interface (I/F) 303, and a bus 304. Here, the CPU 301 is a processor for implementing the units from the adaptive equalizer 201 to the angle shift detecting unit 205 by executing a program corresponding to the functions of the units from the adaptive equalizer 201 to the angle shift detecting unit 205. The memory 302 is a memory for storing the program corresponding to the functions of the units from the adaptive equalizer 201 to the angle shift detecting unit 205, and is, for example, a nonvolatile or volatile semiconductor memory such as a RAM, a ROM, a flash memory, an EPROM, or an EEPROM; a magnetic disk, a flexible disk, an optical disk, a compact disc, a mini disc, a DVD, and or like. The input/output interface 303 is an interface for exchanging signals with the outside of the device. The bus 304 is a communication path for connecting the units from the CPU 301 to the input/output interface 303 to each other.

Note that, some of the functional units of the units from the adaptive equalizer 201 to the angle shift detecting unit 205 may be implemented by dedicated hardware, and the other functional units may be implemented by software or firmware. For example, it is possible that the functions of the adaptive equalizer 201, the phase compensation unit 202, and the decoding unit 203 are implemented by dedicated hardware, and the functions of the power monitor 204 and the angle shift detecting unit 205 are implemented by the CPU 301 reading and executing the program stored in the memory 302.

As described above, the functional units constituting the digital signal processing unit 110 can be implemented by hardware, software, firmware, or a combination thereof.

Next, the operation will be described of the spatial optical communication receiver of the first embodiment.

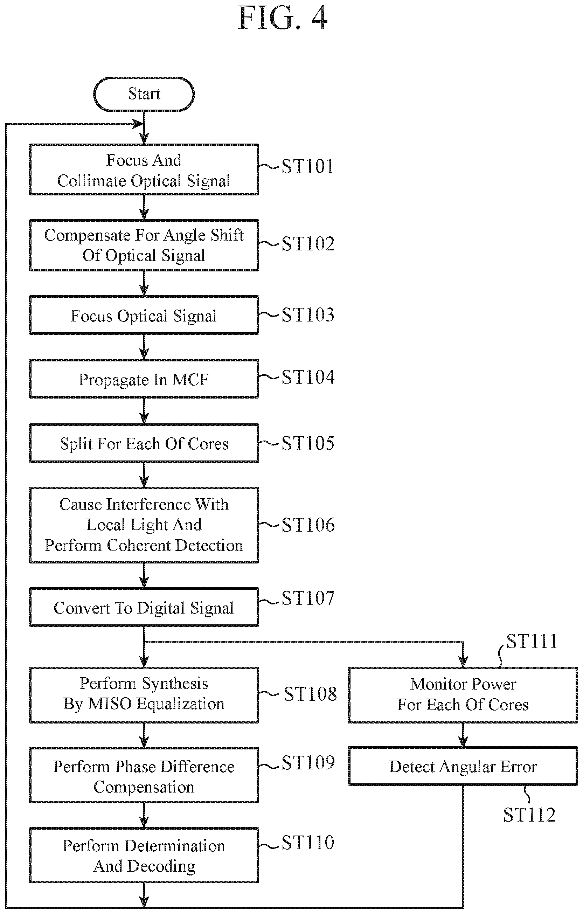

FIG. 4 is a flowchart illustrating the operation of the spatial optical communication receiver of the first embodiment.

When an optical signal spatially propagated is input to the telescope 101, the telescope 101 focuses and collimates the optical signal (step ST101). Next, the pointing mirror 102 compensates for an angle shift of the optical signal (step ST102). The optical signal from the pointing mirror 102 is focused by the focusing optical system 103 (step ST103), is input to the multi-core fiber 104, and propagates in the multi-core fiber 104 (step ST104). Thereafter, the optical signal is split by the splitter 105 into signals of each core (step ST105), and the signals are caused to interfere with the local light from the local light source 107 by the coherent detectors 108, whereby coherent detection is performed (step ST106). Next, analog signals from the coherent detectors 108 are converted to digital signals by the analog-to-digital converters 109 (step ST107). Two processes are performed on the digital signals in parallel in the digital signal processing unit 110. In one process, the digital signals corresponding to each core are synthesized by the adaptive equalizer 201 (step ST108), compensation for the phase difference is performed by the phase compensation unit 202 (step ST109), and determination and decoding are performed by the decoding unit 203 (step ST110). In the other process, the power monitor 204 monitors power from the digital signals corresponding to each core (step ST111), and the angle shift detecting unit 205 detects an angular error (step ST112).

First, the one process (steps ST108 to ST110) will be described.

Here, when the multi-core fiber 104 having N cores is used, signals of two polarized waves orthogonal to each other are input to the adaptive equalizer 201 correspondingly to each of the core, so that inputs are 2N complex signals. The adaptive equalizer 201 includes 2N FIR filters having, for example, complex coefficients, and the 2N inputs are added together after passing through each individual FIR filter. Filter coefficients of the adaptive equalizer 201 are adaptively updated according to the input signals. For example, a constant envelope algorithm is used for the update.

Now, a case is considered where the adaptive equalizer 201 includes an FIR filter operating with one sample/symbol and having a length of M taps. When tap coefficients of the FIR filter corresponding to the i-th core are hix(m) and hiy(m) (m = 1, 2,..., M), and an X polarized wave component is EiX(k) and a Y polarized wave component is EiY(k) of the k-th symbol corresponding to the i-th core input to the adaptive equalizer 201, and an output is EOUT(k), a relationship of expression (1) is obtained.

$$\mathrm{E_{out}}(k) = \sum_{i=1}^{N}\sum_{m=1}^{M} h_{iX}(m)E_{iX}(k-m+1) + \sum_{i=1}^{N}\sum_{m=1}^{M} h_{iY}(m)E_{iY}(k-m+1) \qquad (1)$$

Next, the other process (steps ST111 and ST112) will be described.

The power monitor 204 monitors the power coupled to each of the cores from amplitude values of two polarized waves orthogonal to each other of the signal corresponding to each of the cores. Signal power $P_i$ corresponding to the i-th core is represented by expression (2), where amplitudes of the X polarized wave and Y polarized wave orthogonal to each other are $E_{ix}$ and $E_{iy}$.

$$P_i = |E_{iX}|^2 + |E_{iY}|^2 \qquad (2)$$

As illustrated in FIG. 5, the angle shift detecting unit 205 takes the x-y coordinates with respect to the incident end face of the multi-core fiber 104, sets the center coordinates of the i-th core to $(x_i, y_i)$, and calculates the centroid of optical power at the incident end face of the multi-core fiber 104 by expression (3).

$$x_c = \frac{\sum_{i=1}^{N} x_i P_i}{\sum_{i=1}^{N} P_i}$$

$$y_c = \frac{\sum_{i=1}^{N} y_i P_i}{\sum_{i=1}^{N} P_i}$$

$$( 3 )$$

When a focal length of the focusing optical system 103 is f, an angle shift $\theta_x$ in the x direction and an angle shift $\theta_y$ in the y direction are calculated by expression (4).

$$\theta_x = \sin^{-1}\frac{x_c}{f}, \quad \theta_y = \sin^{-1}\frac{y_c}{f}$$

$$( 4 )$$

The angle shift detecting unit 205 inputs the calculation result to the pointing mirror 102. That is, in the flowchart of FIG. 4, after step ST112, the process returns to step ST101, and in step ST102, the pointing mirror 102 compensates for the input angle shift.

Next, the effects will be described of the spatial optical communication receiver thus configured.

In the case of the conventional configuration using a single mode fiber instead of a multi-core fiber, if the wavefront incident on the focusing optical system is affected by the atmosphere and distorted, the light intensity distribution at the incident end face of the single mode fiber spreads with respect to the core diameter of the single mode fiber, and causes coupling loss.

On the other hand, when the multi-core fiber 104 is used as in the present embodiment, the optical signal is coupled to a plurality of cores since the plurality of cores are arranged on the incident end face, even when the light intensity distribution spreads. When root mean square amplitudes of a signal component and a noise component corresponding to each of the cores are $S_{RMSi}$ and $N_{RMSi}$, signal power and noise power of a signal corresponding to one core are $(S_{RMSi})^2$ and $(N_{RMSi})^2$, respectively. On the other hand, signal power and noise power of a signal synthesized by the adaptive equalizer 201 are expressed by expressions (5) and (6), respectively.

$$\left( \sum_{i=1}^{N} S_{RMSi} \right)^2$$

$$( 5 )$$

$$\sum_{i=1}^{N} (N_{RMSi})^2$$

$$( 6 )$$

Thus, the SNR corresponding to one core is expressed by expression (7), whereas the SNR of the signal synthesized by the adaptive equalizer 201 is expressed by expression (8).

$$SNR_i = \frac{E_{rmsi}^2}{N_{rmsi}^2}$$

$$( 7 )$$

$$SNR = \frac{\left( \sum_{i=1}^{N} S_{RMSi} \right)^2}{\sum_{i=1}^{N} (N_{RMSi})^2}$$

$$( 8 )$$

If the root mean square (RMS) of the signal component and the noise component of each of the cores is constant, the SNR of the synthesized signal is improved to N times the SNR corresponding to one core.

In addition, in the present embodiment, the angle shift can be detected by the angle shift detecting unit 205 without using a dedicated sensor for detecting the angle shift, loss does not occur due to forwarding of the signal light to the sensor, and the beacon light is not required. Then, since coherent detection with high sensitivity is performed by the coherent detectors 108, it is possible to detect the angle shift even if the received power is small.

The fact that the angle shift can be detected by using the multi-core fiber 104 depends on the fact that the optical signals transmitted through each core of the multi-core fiber 104 are transmitted while maintaining a physical positional relationship.

It is required to cause interference with local light for coherent detection. In addition, it is necessary to convert the interfering optical signal into a high-speed electric signal. Thus, when the plurality of coherent detectors are used, there is a limit in downsizing of the entire coherent detector. In the present embodiment, by using the multi-core fiber 104 capable of transmitting light with low loss, the splitter 105 and the coherent detectors 108 can be freely arranged physically away from the optical system, and restrictions can be reduced on the mechanism design of the spatial optical communication receiver.

In addition, since the multi-core fiber is manufactured as a transmission medium, dense core arrangement is stably manufactured, and the spatial optical communication receiver can be implemented at low cost.

Further, in the compensation with only the deformable mirror, compensation for the spatial phase distortion is performed, but compensation for the intensity distribution distortion is not performed. On the other hand, in the present embodiment, synthesis can be performed according to the phase and intensity for each of the cores by the adaptive equalizer 201.

As described above, according to the spatial optical communication receiver of the first embodiment, the spatial optical communication receiver includes: a telescope for focusing an optical signal spatially propagated and outputting the optical signal collimated; a pointing mirror for compensating for an angle shift of the optical signal output from the telescope; a focusing optical system for focusing the optical signal from the pointing mirror; a multi-core fiber having a plurality of cores for transmitting the optical signal focused; a splitter for outputting optical signals of the respective cores transmitted by the multi-core fiber through different single mode fibers of each core; coherent detectors of performing coherent detection on the optical signals from each single mode fiber; and a digital signal processing unit for decoding digital signals of the signals subjected to the coherent detection, in which the digital signal processing unit includes an adaptive equalizer for performing multi-input and single-output equalization, a phase compensation unit for compensating for a phase of a signal from the adaptive equalizer, a decoding unit for decoding the signal phase-compensated, a power monitor for outputting a monitored value of power corresponding to each of the cores, and an angle shift detecting unit for outputting an angle shift signal indicating a value of the angle shift of the optical signal input to the focusing optical system by using the monitored value, and the pointing mirror updates a compensation angle correspondingly to the angle shift signal, so that degradation of the signal-to-noise power ratio and complication of the configuration can be suppressed, and stable spatial optical communication can be performed.

Second Embodiment.

In a second embodiment, control of the digital signal processing unit and control of the deformable mirror are performed in cooperation with each other.

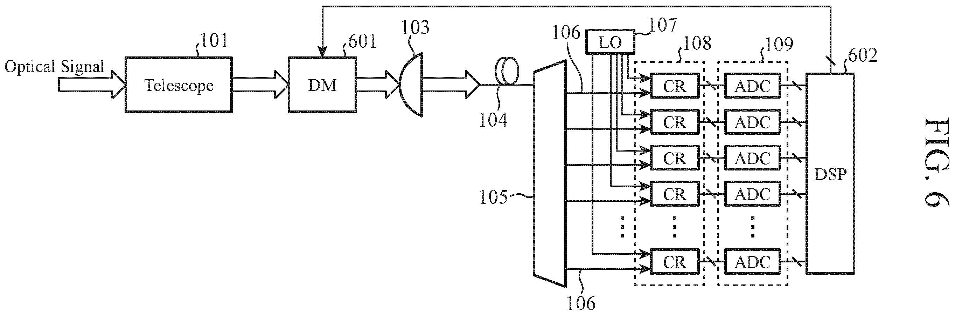

FIG. 6 is a configuration diagram of a spatial optical communication receiver according to the second embodiment.

The illustrated spatial optical communication receiver includes the telescope 101, a deformable mirror (DM) 601, the focusing optical system 103, the multi-core fiber (MCF) 104, the splitter 105, the single mode fibers 106, the local light source 107, the coherent detectors 108, the analog-to-digital converters (ADC) 109, and a digital signal processing unit (DSP) 602. Here, since the configuration other than the deformable mirror 601 and the digital signal processing unit 602 is the same as the configuration of the first embodiment illustrated in FIG. 1, corresponding portions are denoted by the same reference numerals and descriptions thereof will be omitted.

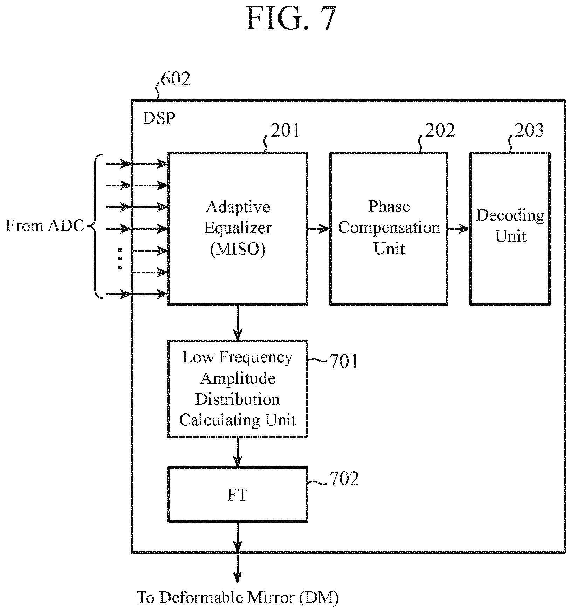

The deformable mirror 601 is a mirror for compensating for the wavefront distortion of the optical signal output from the telescope 101 by changing the shape of the mirror, and is configured to compensate for the wavefront distortion and output the optical signal with a signal of the wavefront distortion detected by the digital signal processing unit 602 as an input. The digital signal processing unit 602 is a processing unit for decoding the digital signals converted by the analog-to-digital converters 109 and calculating the wavefront distortion of the input of the focusing optical system 103, and its internal configuration is illustrated in FIG. 7.

In FIG. 7, the digital signal processing unit 602 includes the adaptive equalizer 201, the phase compensation unit 202, the decoding unit 203, a low frequency amplitude distribution calculating unit 701, and a Fourier transform unit (FT) 702. Here, since the adaptive equalizer 201, the phase compensation unit 202, and the decoding unit 203 are the same as in the configuration of the first embodiment illustrated in FIG. 2, corresponding portions are denoted by the same reference numerals and descriptions thereof will be omitted. The low frequency amplitude distribution calculating unit 701 is a functional unit for calculating an amplitude distribution at the incident end face of the multi-core fiber 104 by calculating amplitude of the optical signal coupled to each of the cores at the incident end face of the multi-core fiber 104 from the filter coefficients of the adaptive equalizer 201. The Fourier transform unit 702 is a circuit for calculating and outputting wavefront distortion at the input of the focusing optical system 103 from the amplitude distribution calculated by the low frequency amplitude distribution calculating unit 701. In addition, the output of the Fourier transform unit 702 is sent to the deformable mirror 601, and the deformable mirror 601 is configured to compensate for the wavefront distortion on the basis of a value of the wavefront distortion.

In addition, also for the digital signal processing unit 602 in the second embodiment, each functional unit may be configured by dedicated hardware, or may be configured by software, firmware, or the like.

Next, the operation will be described of the spatial optical communication receiver of the second embodiment.

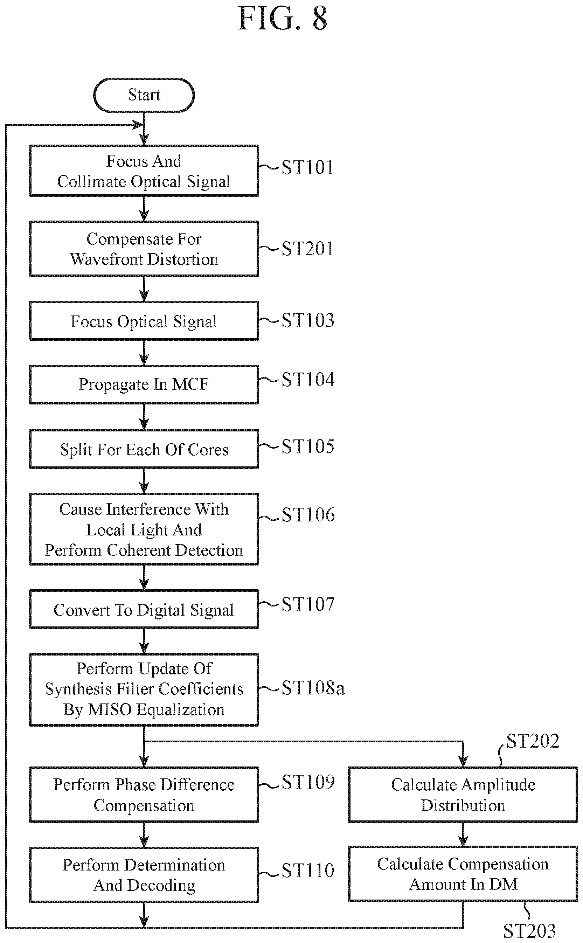

FIG. 8 is a flowchart illustrating the operation of the spatial optical communication receiver of the second embodiment.

In the flowchart of FIG. 8, first, in step ST101, the telescope 101 focuses and collimates the optical signal as in the first embodiment. Next, in the second embodiment, the deformable mirror 601 compensates for the wavefront distortion of the optical signal output from the telescope 101 (step ST201). Thereafter, steps ST103 to ST107 are the same as in the first embodiment. In the second embodiment, in the next step ST108a, the adaptive equalizer 201 performs synthesis by MISO equalization similarly to the first embodiment, and updates the filter coefficients of the adaptive equalizer 201. In the subsequent parallel processes, one process (steps ST109 and ST110) by the phase compensation unit 202 and the decoding unit 203 is the same as in the first embodiment. In the other process, first, the low frequency amplitude distribution calculating unit 701 calculates an amplitude distribution at the incident end face of the multi-core fiber 104 by calculating amplitude of the optical signal coupled to each of the cores at the incident end face of the multi-core fiber 104 from the filter coefficients of the adaptive equalizer 201 (step ST202). Next, the Fourier transform unit 702 calculates wavefront distortion at the input of the focusing optical system from the calculated amplitude distribution, and outputs the wavefront distortion as a compensation amount in the deformable mirror 601 (step ST203). Hereinafter, details will be described of the low frequency amplitude distribution calculating unit 701 and the Fourier transform unit 702.

First, the low frequency amplitude distribution calculating unit 701 will be described. The phase $\theta_i$ of the i-th core is calculated from the filter coefficients of the adaptive equalizer 201 by expression (9).

$$\theta_i = \arg\left(\left|\overline{h_x}\right| h_x + \left|\overline{h_y}\right| h_y\right),$$
$$\overline{h_x} = \sum_{m=1}^{M} h_{iX}(m), \qquad \overline{h_y} = \sum_{m=1}^{M} h_{iY}(m) \tag{9}$$

A distribution of the phase at the input end of the multi-core fiber 104 is obtained by unwrapping the phase with respect to the coordinates from the phase at the coordinates $(x_i, y_i)$ of each of the cores. In addition, a distribution of the absolute value of the amplitude is calculated from the RMS calculated by expression (10), or calculated from the RMS of the input signals.

$$\mathrm{RMSh}_i = \sqrt{\sum_{m=1}^{M} h_{iX}^2(m) + h_{iY}^2(m)} \tag{10}$$

By combining the phase and the absolute value of the amplitude, the amplitude distribution at the incident end face of the multi-core fiber 104 can be obtained.

Here, the amplitude distribution fluctuates with atmospheric fluctuation, and the low frequency amplitude distribution calculating unit 701 applies a low-pass filter of, for example, 1 kHz to the amplitude distribution fluctuating along time, and calculates and outputs a low-frequency component.

Next, the details will be described of the Fourier transform unit 702. The Fourier transform unit 702 performs a two-dimensional Fourier transform on the input amplitude distribution at the incident end face of the multi-core fiber 104, and converts it into an amplitude distribution at the input of the focusing optical system 103. By extracting the phase of the amplitude distribution, the phase distribution, that is, the wavefront distortion is calculated and output to the deformable mirror 601.

The mirror shape is controlled to cancel the input wavefront distortion, in the deformable mirror 601.

As described above, in the second embodiment, the deformable mirror 601 compensates for low-speed wavefront distortion, and the digital signal processing unit 602 removes remaining distortion, whereby a required compensation amount can be suppressed in the digital signal processing unit 602, and as a result, the digital signal processing unit 602 can perform compensation for the wavefront distortion at high speed and high precision, and wavefront distortion compensation capability is increased of a combination of the deformable mirror 601 and the digital signal processing unit 602.

Also in the second embodiment, by using a multi-core fiber similarly to the first embodiment, it is possible to improve the SNR as compared with the conventional configuration using a single mode fiber. In addition, there is an effect that a wavefront sensor is not required, there is no loss due to light forwarding to the wavefront sensor, and the beacon is not required. Note that, the fact that the wavefront distortion can be detected by using the multi-core fiber depends on the fact that the optical signals propagating through each core of the multi-core fiber are propagated while maintaining a physical positional relationship.

Further, similarly to the first embodiment, by using the multi-core fiber, restrictions on the mechanism design are reduced.

In addition, since the multi-core fiber is manufactured as a transmission medium, dense core arrangement is stably manufactured, and the spatial optical communication receiver can be implemented at low cost.

Then, in the compensation with only the deformable mirror, compensation for the spatial phase distortion is performed, but compensation for the intensity distribution distortion is not performed. On the other hand, in the second embodiment, synthesis can be performed according to the phase and intensity for each of the cores by the adaptive equalizer 201.

As described above, according to the spatial optical communication receiver of the second embodiment, the spatial optical communication receiver includes: a telescope for focusing an optical signal spatially propagated and outputting the optical signal collimated; a deformable mirror for compensating for wavefront distortion of the optical signal output from the telescope; a focusing optical system for focusing the optical signal from the deformable mirror; a multi-core fiber having a plurality of cores for transmitting the optical signal focused; coherent detectors for performing coherent detection on optical signals of each core transmitted by the multi-core fiber through different single mode fibers of each core; and a digital signal processing unit for decoding digital signals of the signals subjected to the coherent detection, in which the digital signal processing unit includes an adaptive equalizer for performing multi-input and single-output equalization, a phase compensation unit for compensating for a phase of a signal from the adaptive equalizer, a decoding unit for decoding the signal phase-compensated, a low frequency amplitude distribution calculating unit for calculating a low frequency component of an amplitude distribution at a multi-core fiber incident end face from filter coefficients of the adaptive equalizer, and a Fourier transform unit for calculating wavefront distortion by converting the amplitude distribution from the low frequency amplitude distribution calculating unit into an amplitude distribution at an input of the focusing optical system, and the deformable mirror updates a wavefront distortion compensation amount correspondingly to the wavefront distortion output from the Fourier transform unit, so that degradation of the signal-to-noise power ratio and complication of the configuration can be suppressed, and stable spatial optical communication can be performed.

Third Embodiment.

In a third embodiment, the digital signal processing unit, and the deformable mirror, the wavefront sensor, and the wavefront compensation control unit positioned on the input side of the focusing optical system are controlled in cooperation with each other.

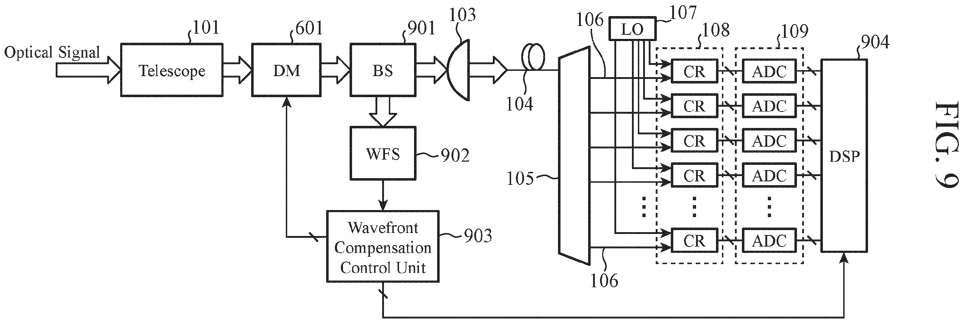

FIG. 9 is a configuration diagram of a spatial optical communication receiver of the third embodiment.

The illustrated spatial optical communication receiver includes the telescope 101, the deformable mirror (DM) 601, a distributor (BS) 901, a wavefront sensor (WFS) 902, a wavefront compensation control unit 903, the focusing optical system 103, the multi-core fiber (MCF) 104, the splitter 105, the single mode fibers 106, the local light source 107, the coherent detectors 108, the analog-to-digital converters (ADC) 109, and a digital signal processing unit (DSP) 904. Here, since the configuration other than the distributor 901, the wavefront sensor 902, the wavefront compensation control unit 903, and the digital signal processing unit 904 is the same as the configuration of the second embodiment illustrated in FIG. 6, corresponding portions are denoted by the same reference numerals and descriptions thereof will be omitted.

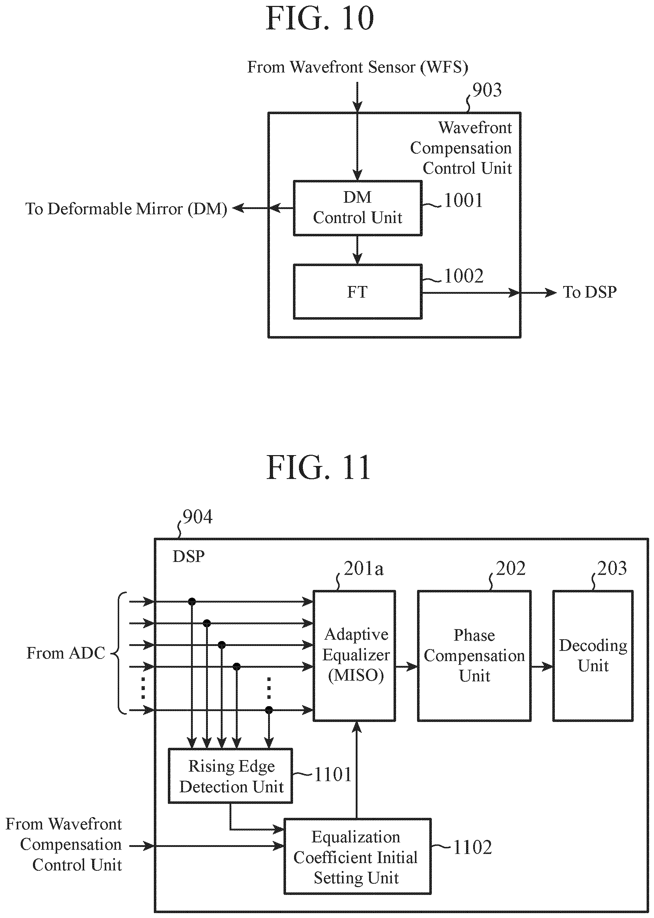

The distributor 901 is a distributor for distributing an input optical signal to the focusing optical system 103 and the wavefront sensor 902. The wavefront sensor 902 is a sensor for detecting wavefront distortion of the light distributed by the distributor 901. The wavefront compensation control unit 903 is configured to output the signal of the wavefront distortion detected by the wavefront sensor 902 to the deformable mirror 601, and output a signal of the amplitude distribution at the incident end face of the multi-core fiber 104 caused by remaining wavefront distortion to the digital signal processing unit 904. The digital signal processing unit 904 is configured to decode digital signals converted by the analog-to-digital converters 109, and set initial values of an adaptive equalizer 201a (illustrated in FIG. 11) on the basis of the signal of the amplitude distribution output from the wavefront compensation control unit 903. FIG. 10 illustrates an internal configuration of the wavefront compensation control unit 903, and FIG. 11 illustrates an internal configuration of the digital signal processing unit 904.

In FIG. 10, the wavefront compensation control unit 903 includes a deformable mirror control unit (hereinafter, referred to as a DM control unit) 1001 and a Fourier transform unit (FT) 1002. The DM control unit 1001 is configured to output a signal of the wavefront distortion in a compensable range to the deformable mirror 601 in the wavefront distortion detected by the wavefront sensor 902 in consideration of the spatial resolution and dynamic range of the deformable mirror 601. In addition, the DM control unit 1001 has a function of outputting a signal of a value of wavefront distortion remaining after the compensation is performed by the deformable mirror 601 on the wavefront distortion detected by the wavefront sensor 902. The Fourier transform unit 1002 is configured to calculate the amplitude distribution at the incident end face of the multi-core fiber 104 by converting the value of the wavefront distortion output from the DM control unit 1001 to a phase distribution and performing Fourier transform, and output the amplitude distribution to the digital signal processing unit 904.

In FIG. 11, the digital signal processing unit 904 includes the adaptive equalizer 201a, the phase compensation unit 202, the decoding unit 203, a rising edge detection unit 1101, and an equalization coefficient initial setting unit 1102. The rising edge detection unit 1101 detects that signal input is started from the analog-to-digital converters 109 to the digital signal processing unit 904. The equalization coefficient initial setting unit 1102 is a functional unit for setting values to filters of the adaptive equalizer 201a on the basis of the amplitude distribution input from the wavefront compensation control unit 903 when the rising edge detection unit 1101 detects that the signal input is started. The adaptive equalizer 201a is a MISO equalizer configured to adaptively update the filter coefficients according to input signals with the filter coefficients set by the equalization coefficient initial setting unit 1102 as initial values. The phase compensation unit 202 and the decoding unit 203 are the same as in the second embodiment.

In addition, for the digital signal processing unit 904 and the wavefront compensation control unit 903 in the third embodiment, each functional unit may be configured by dedicated hardware, or may be configured by software, firmware, or the like.

Next, the operation will be described of the spatial optical communication receiver of the third embodiment.

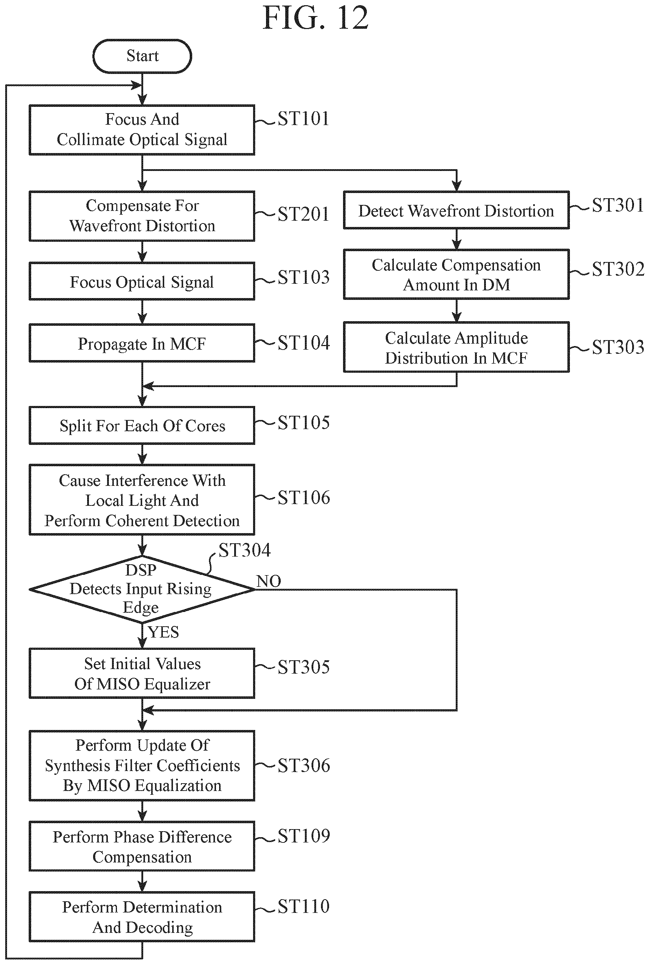

FIG. 12 is a flowchart illustrating the operation of the spatial optical communication receiver of the third embodiment.

In the flowchart of FIG. 12, first, in step ST101, the telescope 101 focuses and collimates the optical signal as in the first and second embodiments. Thereafter, two processes are performed in parallel. One process is a process of compensating for the wavefront distortion of the optical signal by the deformable mirror 601, focusing the optical signal by the focusing optical system 103, and propagating the optical signal in the multi-core fiber 104 (steps ST201, ST103, ST104), and is the same as in the second embodiment. The other process is a process of detecting the wavefront distortion by the wavefront sensor 902 from the optical signal distributed by the distributor 901 (step ST301), and then calculating a compensation amount in the deformable mirror 601 by the wavefront compensation control unit 903 (step ST302) and calculating an amplitude distribution in the multi-core fiber 104 (step ST303).

After the two parallel processes, the optical signal is split for each of the cores by the splitter 105 (step ST105), and analog signals having been caused to interfere with the local light is obtained by the coherent detectors 108, and the analog signals are converted into digital signals by the analog-to-digital converters 109. Next, when the rising edge detection unit 1101 of the digital signal processing unit 904 detects a rising edge of an input digital signal (step ST304-Yes), the equalization coefficient initial setting unit 1102 sets initial values of the equalization coefficients of the adaptive equalizer 201a (step ST305). The rising edge detection unit 1101 detects the start of signal input when any of the outputs (for example, RMS) from the analog-to-digital converters 109 is greater than or equal to a preset threshold. Hereinafter, the details will be described of processing of the equalization coefficient initial setting unit 1102.

The equalization coefficient initial setting unit 1102 inputs the amplitude distribution output from the wavefront compensation control unit 903, and calculates amplitude of the optical signal propagating through each of the cores from the amplitude distribution. Here, considering a case where the adaptive equalizer 201a includes an FIR filter operating with one sample/symbol and having a length of M taps similarly to the second embodiment, and it is assumed that the amplitude of the i-th core is $A_i$, for example. The equalization coefficient initial setting unit 1102 sets the filter coefficients on the basis of the maximum ratio synthesis as in expression (11), for example. In the expression, * indicates a complex conjugate. Here, $m_c$ indicates a position of an approximate center of the tap, and is for example, M/2.

$$\begin{aligned} &h_{Xi}(m_c) = A_i^*, \\ &h_{Xi}(m) = 0, \qquad m \neq m_c \end{aligned} \qquad (11)$$

The adaptive equalizer 201a adaptively updates the filter coefficients according to the input signals with the filter coefficients set by equalization coefficient initial setting unit 1102 as the initial values (step ST306). Thereafter, similarly to the first and second embodiments, the digital signals corresponding to each core are synthesized by the adaptive equalizer 201a, compensation for the phase difference is performed by the phase compensation unit 202 (step ST109), and determination and decoding are performed by the decoding unit 203 (step ST110). Note that, in step ST304, when the input signals to the digital signal processing unit 904 are not detected in the equalization coefficient initial setting unit 1102 (step ST304-No), the initial values of the adaptive equalizer 201a are not set, the process proceeds to step ST306, and update of the synthesis filter coefficients are performed by the adaptive equalizer 201a.

In general, the MISO equalizer adaptively sets filter coefficients for input signals; however, since the input signals contain noise, many signal inputs are required to converge the filter coefficients, and it takes time for the convergence. On the other hand, in the third embodiment, the update of the filter coefficients can be started from a condition for approximate convergence by setting the initial values of the coefficients of the adaptive equalizer 201a on the basis of the signal from the wavefront compensation control unit 903, and as a result, the convergence time is shortened. That is, communication can be established at high speed when reception of the signal is started. In addition, since a relationship between the amplitude distribution at the deformable mirror 601 and the amplitude distribution at the incident end face of the multi-core fiber 104 is a relationship of Fourier transform, it is possible to relatively reduce the spatial resolution or reduce a phase change at the incident end face of the multi-core fiber 104 even if the deformable mirror 601 has the wavefront distortion, that is, phase distribution, having a high spatial resolution and a large fluctuation range. Note that, the relationship is the same even if the deformable mirror 601 and the incident end face of the multi-core fiber 104 are exchanged. Thus, it is possible to compensate for the wavefront distortion having a high spatial resolution and a large fluctuation range, for which compensation cannot be performed with only the deformable mirror 601 or only the multi-core fiber 104 and the digital signal processing unit 904.

The fact that the equalization coefficient initial setting unit 1102 can set the initial values of the filter coefficients of the adaptive equalizer 201a on the basis of the amplitude distribution from the wavefront compensation control unit 903 depends on the fact that the optical signals transmitted through each core of the multi-core fiber 104 are transmitted while maintaining a physical positional relationship.

In the compensation using only the deformable mirror, compensation for the spatial phase distortion is performed, but compensation for the intensity distribution distortion is not performed. On the other hand, in the third embodiment, similarly to the first and second embodiments, synthesis can be performed according to the phase and intensity for each of the cores by the adaptive equalizer 201a.

Further, similarly to the first embodiment, by using the multi-core fiber, restrictions on the mechanism design are reduced.

As described above, according to the spatial optical communication receiver of the third embodiment, the spatial optical communication receiver includes: a telescope for focusing an optical signal spatially propagated and outputting the optical signal collimated; a distributor for outputting the optical signal output from the telescope in a first direction and a second direction; a wavefront sensor for detecting wavefront distortion of the optical signal output in the first direction; a deformable mirror for compensating for wavefront distortion of the optical signal output in the second direction; a focusing optical system for focusing the optical signal from the deformable mirror; a multi-core fiber having a plurality of cores for transmitting the optical signal focused; coherent detectors for performing coherent detection on optical signals of each core transmitted by the multi-core fiber through different single mode fibers of each core; a digital signal processing unit for decoding digital signals of the signals subjected to the coherent detection; and a wavefront compensation control unit for controlling the deformable mirror and the digital signal processing unit on the basis of the wavefront distortion detected by the wavefront sensor, in which the wavefront compensation control unit includes a deformable mirror control unit for controlling the deformable mirror to cancel the wavefront distortion detected by the wavefront sensor, and a Fourier transform unit for calculating wavefront distortion remaining in an output from the deformable mirror, converting the wavefront distortion into an amplitude distribution at an incident end face of the multi-core fiber by performing Fourier transform, and outputting the amplitude distribution, and the digital signal processing unit includes an adaptive equalizer for performing multi-input and single-output equalization, a phase compensation unit for compensating for a phase of a signal from the adaptive equalizer, a decoding unit for decoding the signal phase-compensated, and an equalization coefficient initial setting unit for setting initial values of equalization coefficients of the adaptive equalizer on the basis of the amplitude distribution output from the Fourier transform unit, so that communication can be established at high speed when reception of the signal is started, in addition to the effects of the first embodiment.

Fourth Embodiment.

In a fourth embodiment, initial values of the adaptive equalizer are set by determining an erroneous convergence of the adaptive equalizer in the digital signal processing unit.

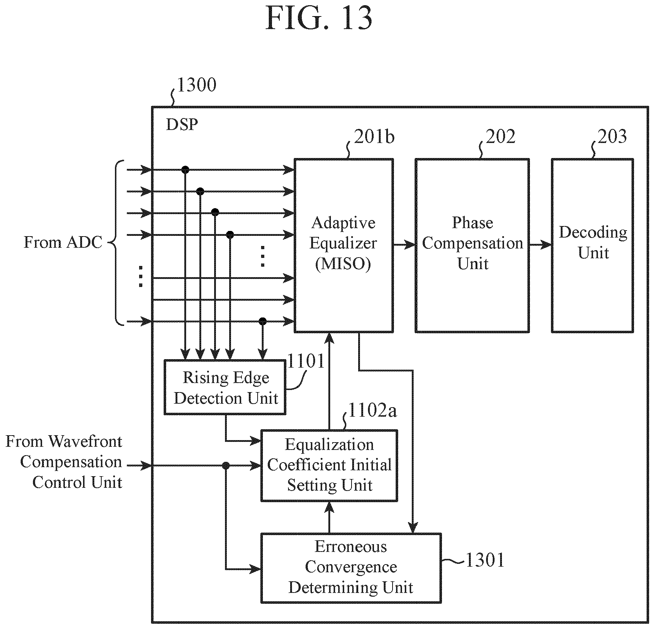

FIG. 13 is a configuration diagram illustrating a digital signal processing unit 1300 in a spatial optical communication receiver of the fourth embodiment.

The illustrated digital signal processing unit 1300 includes an adaptive equalizer 201b, the phase compensation unit 202, the decoding unit 203, the rising edge detection unit 1101, an equalization coefficient initial setting unit 1102a, and an erroneous convergence determining unit 1301. The adaptive equalizer 201b is a MISO equalizer configured to set values given by the equalization coefficient initial setting unit 1102a as initial values, similarly to the adaptive equalizer 201a in the third embodiment, and provide an erroneous convergence determination signal to the erroneous convergence determining unit 1301. The equalization coefficient initial setting unit 1102a is configured to input a signal of the amplitude distribution output from the wavefront compensation control unit, similarly to the equalization coefficient initial setting unit 1102 of the third embodiment, and set the initial values of the adaptive equalizer 201b when the signal or an erroneous convergence signal output from the erroneous convergence determining unit 1301 is input. The configurations of the phase compensation unit 202 and the decoding unit 203 in the digital signal processing unit 1300 are the same as those of the phase compensation unit 202 and the decoding unit 203 of the first to third embodiments. In addition, since the configuration of the spatial optical communication receiver other than the digital signal processing unit 1300 is the same as the configuration of the third embodiment illustrated in FIG. 9, illustration and description of each component are omitted. Note that, in the following description of the spatial optical communication receiver, the configuration illustrated in FIG. 9 will be used.

In addition, for the digital signal processing unit 1300 and the wavefront compensation control unit 903 in the fourth embodiment, each functional unit may be configured by dedicated hardware, or may be configured by software, firmware, or the like.

Next, the operation will be described of the spatial optical communication receiver of the fourth embodiment.

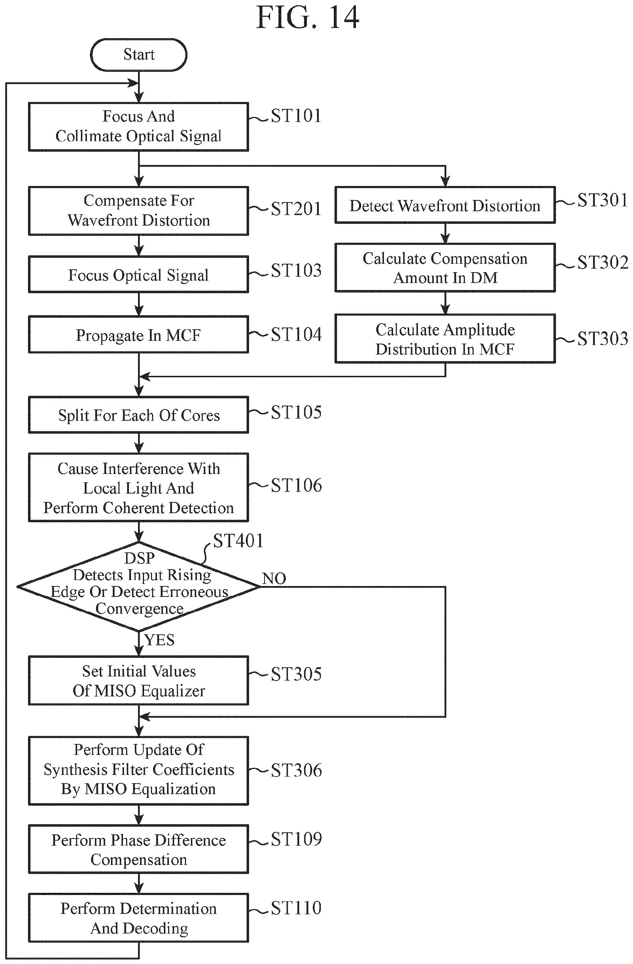

FIG. 14 is a flowchart illustrating the operation of the spatial optical communication receiver of the fourth embodiment.

In the flowchart of FIG. 14, processes from step ST101 to step ST106 is the same as processes from step ST101 to step ST106 of the third embodiment illustrated in FIG. 12. Next, in the fourth embodiment, after the coherent detectors 108 perform coherent detection in step ST106, the equalization coefficient initial setting unit 1102a, when there is a signal input to the digital signal processing unit 1300, that is, the rising edge of the signal is detected in the rising edge detection unit 1101, or when the erroneous convergence determination signal is output from the erroneous convergence determining unit 1301 (step ST401-Yes), sets initial values of the adaptive equalizer 201b (step ST305). Note that, the operation of setting the initial values by the equalization coefficient initial setting unit 1102a when there is a signal input to the digital signal processing unit 1300 is the same as that of the third embodiment.

In addition, the operation of setting the initial values by the equalization coefficient initial setting unit 1102a by the erroneous convergence determining unit 1301 is as follows. First, the erroneous convergence determining unit 1301 inputs the amplitude distribution output from the wavefront compensation control unit 903 and the filter coefficients of the adaptive equalizer 201b, and compares these with each other to determine erroneous convergence of the adaptive equalizer 201b. When the determination result is erroneous convergence, the erroneous convergence determining unit 1301 outputs an initial value setting signal for the adaptive equalizer 201b to the equalization coefficient initial setting unit 1102a. As for the erroneous convergence determination, for example, when $h_{avgi}$ calculated by expression (12) from the filter coefficients of the adaptive equalizer 201b and $A_i^*$ are compared with each other by expression (13) and a value $\gamma$ of expression (13) is less than or equal to 0.5, it is determined as the erroneous convergence.

$$h_{avgi} = |\overline{h_x}|h_x + |\overline{h_y}|h_{y'}$$

$$\overline{h_x} = \sum_{m=1}^{M} h_{iX}(m), \qquad \overline{h_y} = \sum_{m=1}^{M} h_{iY}(m) \qquad (1\ 2)$$

$$\gamma = \frac{\left|\sum_{i=1}^{N} h_{avgi} \cdot A_i^*\right|}{\sqrt{\left(\sum_{i=1}^{N} h_{avgi}^2\right)\left(\sum_{i=1}^{N} A_i^{*2}\right)}} \qquad (1\ 3)$$

When it is determined as the erroneous convergence by the erroneous convergence determining unit 1301, the equalization coefficient initial setting unit 1102a sets the initial values of the adaptive equalizer 201b similarly to the case where there is a signal input to the digital signal processing unit 1300 (step ST305).

Processes after setting the initial values of the adaptive equalizer 201b in step ST305 (steps ST306 to ST109 to ST110) are the same as those in the third embodiment. Note that, in step ST401, when neither the input signal to the digital signal processing unit 1300 nor the erroneous convergence determination signal by the erroneous convergence determining unit 1301 is detected in the equalization coefficient initial setting unit 1102a (step ST401-No), the initial values of the adaptive equalizer 201b are not set, the process proceeds to step ST306, and update of the synthesis filter coefficients are performed by the adaptive equalizer 201b.

As described above, according to the spatial optical communication receiver of the fourth embodiment, the digital signal processing unit includes an erroneous convergence determining unit for outputting an erroneous convergence signal to the equalization coefficient initial setting unit when comparing a residual wavefront distortion amount from the wavefront compensation control unit with filter coefficients of the adaptive equalizer and detecting erroneous convergence of the adaptive equalizer, and the equalization coefficient initial setting unit sets the initial values of the adaptive equalizer when the erroneous convergence signal is output from the erroneous convergence determining unit, so that it is possible to prevent the adaptive equalizer from remaining in an erroneous convergence state, in addition to the effects of the third embodiment.

Fifth Embodiment.

In a fifth embodiment, instead of the multi-core fiber, a multi-core fiber amplifier is used for performing optical amplification.

The multi-core fiber 104 in the first to fourth embodiments may be the multi-core fiber amplifier, and the multi-core fiber amplifier performs optical amplification when propagating an optical signal. With such a configuration, noise can be suppressed when the optical signal is converted into an electric signal in coherent detection, the SNR of the signal can be improved, and communication quality can be improved.

Note that, in the invention of the present application, within the scope of the invention, free combination of the embodiments, a modification of an arbitrary component of each embodiment, or omission of an arbitrary component in each embodiment is possible.

INDUSTRIAL APPLICABILITY

As described above, the spatial optical communication receiver according to the present invention relates to a configuration for inputting an optical signal spatially propagated, performing coherent detection, and decoding a digital signal of the detected signal, and is suitable, for example, for use in large-capacity spatial communication in which a transceiver is mounted on a moving object such as an aircraft or satellite.

REFERENCE SIGNS LIST

101: telescope, 102: pointing mirror (PM), 103: focusing optical system, 104: multi-core fiber (MCF), 105: splitter, 106: single mode fiber, 107: local light source, 108: coherent detector, 109: analog-to-digital converter (ADC), 110, 602, 904, 1300: digital signal processing unit (DSP), 201, 201a, 201b: adaptive equalizer, 202: phase compensation unit, 203: decoding unit, 204: power monitor, 205: angle shift detecting unit, 601: deformable mirror (DM), 701: low frequency amplitude distribution calculating unit, 702, 1002: Fourier transform unit (FT), 901: distributor (BS), 902: wavefront sensor (WFS), 903: wavefront compensation control unit, 1001: deformable mirror control unit (DM control unit), 1101: rising edge detection unit, 1102, 1102a: equalization coefficient initial setting unit, 1301: erroneous convergence determining unit

**Claims**

1. A spatial optical communication receiver comprising:

   a telescope (101) for focusing a spatially propagated optical signal and outputting the optical signal collimated;
   a pointing mirror (102) for compensating for an angle shift of the optical signal output from the telescope;
   a focusing optical system (103) for focusing the optical signal from the pointing mirror;
   a multi-core fiber (104) having a plurality of cores for transmitting the optical signal focused;
   a splitter (105) for outputting optical signals of each core transmitted by the multi-core fiber through different single mode fibers for each core;
   coherent detectors (108) for performing coherent detection on the optical signals from each single mode fiber; and
   a digital signal processing unit (110, 602, 904, 1300) for decoding digital signals of the signals subjected to the coherent detection, wherein
   the digital signal processing unit (110, 602, 904, 1300) includes an adaptive equalizer (201, 201a, 201b) for performing multi-input and single-output equalization, a phase compensation unit (202) for compensating for a phase of a signal from the adaptive equalizer, a decoding unit (203) for decoding the phase-compensated signal, a power monitor (204) for outputting a monitored value of power corresponding to each of the cores, and an angle shift detecting unit (205) for outputting an angle shift signal indicating a value of the angle shift of the optical signal input to the focusing optical system by using the monitored value, and
   wherein the pointing mirror (102) is adapted to update a compensation angle correspondingly to the angle shift signal.

2. A spatial optical communication receiver comprising:

a telescope (101) for focusing a spatially propagated optical signal and outputting the optical signal collimated;
a deformable mirror (601) for compensating for wavefront distortion of the optical signal output from the telescope;
the focusing optical system (103) for focusing the optical signal from the deformable mirror;
a multi-core fiber (104) having a plurality of cores for transmitting the optical signal focused;
coherent detectors (108) for performing coherent detection on optical signals of each core transmitted by the multi-core fiber through different single mode fibers of each core; and
a digital signal processing unit (110, 602, 904, 1300) for decoding digital signals of the signals subjected to the coherent detection, wherein
the digital signal processing unit (110, 602, 904, 1300) includes an adaptive equalizer (201, 201a, 201b) for performing multi-input and single-output equalization, a phase compensation unit (202) for compensating for a phase of a signal from the adaptive equalizer, a decoding unit (203) for decoding the phase-compensated signal, a low frequency amplitude distribution calculating unit (701) for calculating a low frequency component of an amplitude distribution at a multi-core fiber incident end face from filter coefficients of the adaptive equalizer, and a Fourier transform unit (702, 1002) for calculating wavefront distortion by converting the amplitude distribution from the low frequency amplitude distribution calculating unit into an amplitude distribution at an input of the focusing optical system, and
wherein the deformable mirror (601) is adapted to update a wavefront distortion compensation amount correspondingly to the wavefront distortion output from the Fourier transform unit.

3. The spatial optical communication receiver according to claim 2, further comprising:

a distributor (901) for outputting the optical signal output from the telescope in a first direction and a second direction;
a wavefront sensor (902) for detecting wavefront distortion of the optical signal output in the first direction;
the deformable mirror (601) for compensating for wavefront distortion of the optical signal output in the second direction;
and
a wavefront compensation control unit (903) for controlling the deformable mirror and the digital signal processing unit on a basis of the wavefront distortion detected by the wavefront sensor, wherein
the wavefront compensation control unit (903) includes
a deformable mirror control unit (1001) for controlling the deformable mirror to cancel the wavefront distortion detected by the wavefront sensor, and a Fourier transform unit (1002) for calculating wavefront distortion remaining in an output from the deformable mirror, converting the wavefront distortion into an amplitude distribution at an incident end face of the multi-core fiber by performing Fourier transform, and outputting the amplitude distribution, and
the digital signal processing unit (110, 602, 904, 1300) further includes an equalization coefficient initial setting unit (1102, 1102a) for setting initial values of equalization coefficients of the adaptive equalizer on a basis of the amplitude distribution output from the Fourier transform unit.

4. The spatial optical communication receiver according to claim 3, wherein the digital signal processing unit (110, 602, 904, 1300) includes an erroneous convergence determining unit (1301) for outputting an erroneous convergence signal to the equalization coefficient initial setting unit when comparing a residual wavefront distortion amount from the wavefront compensation control unit with filter coefficients of the adaptive equalizer and detecting erroneous convergence of the adaptive equalizer, and the equalization coefficient initial setting unit sets the initial values of the adaptive equalizer when the erroneous convergence signal is output from the erroneous convergence determining unit.

5. The spatial optical communication receiver according to any one of claims 1 to 4, wherein a multi-core fiber amplifier is used instead of the multi-core fiber.

**Patentansprüche**

1. Empfänger für räumliche optische Kommunikation, umfassend:

ein Teleskop (101) zum Fokussieren eines räumlich propagierten optischen Signals und zum Ausgeben des kollimierten optischen Signals;
einen Richtspiegel (102) zum Kompensieren einer Winkelverschiebung des vom Teleskop ausgegebenen optischen Signals;

ein fokussierendes optisches System (103) zum Fokussieren des optischen Signals des Richtspiegels;

eine Multicore-Faser (104) mit einer Vielzahl von Kernen zum Übertragen des fokussierten optischen Signals;

einen Splitter (105) zum Ausgeben optischer Signale jedes Kerns, die von der Multicore-Faser durch verschiedene Monomodefasern für jeden Kern übertragen werden;

kohärente Erfasser (108) zum Durchführen einer kohärenten Erfassung der optischen Signale von jeder Monomodefaser; und

eine Digitalsignalverarbeitungseinheit (110, 602, 904, 1300) zum Dekodieren digitaler Signale der Signale, die der kohärenten Erfassung unterzogen wurden, wobei

die Digitalsignalverarbeitungseinheit (110, 602, 904, 1300) einen adaptiven Entzerrer (201, 201a, 201b) zum Durchführen einer Entzerrung mit mehreren Eingängen und einem Ausgang, eine Phasenkompensationseinheit (202) zum Kompensieren einer Phase eines Signals von dem adaptiven Entzerrer, eine Dekodiereinheit (203) zum Dekodieren des phasenkompensierten Signals, einen Leistungsmonitor (204) zum Ausgeben eines überwachten Leistungswerts, der jedem der Kerne entspricht, und eine Winkelverschiebungserfassungseinheit (205) zum Ausgeben eines Winkelverschiebungssignals, das einen Wert der Winkelverschiebung des optischen Signals anzeigt, das in das fokussierende optische System unter Verwendung des überwachten Werts eingegeben wird, umfasst, und

wobei der Richtspiegel (102) ausgelegt ist, einen Kompensationswinkel entsprechend dem Winkelverschiebungssignal zu aktualisieren.

**2.** Empfänger für räumliche optische Kommunikation, umfassend:

ein Teleskop (101) zum Fokussieren eines räumlich propagierten optischen Signals und zum Ausgeben des kollimierten optischen Signals;

einen verformbaren Spiegel (601) zum Kompensieren einer Wellenfrontverzerrung des vom Teleskop ausgegebenen optischen Signals;

das fokussierende optische System (103) zum Fokussieren des optischen Signals des verformbaren Spiegels;

eine Multicore-Faser (104) mit einer Vielzahl von Kernen zum Übertragen des fokussierten optischen Signals;

kohärente Erfasser (108) zum Durchführen einer kohärenten Erfassung von optischen Signalen jedes Kerns, die von der Multicore-Faser durch verschiedene Monomodefasern jedes Kerns übertragen werden; und

eine Digitalsignalverarbeitungseinheit (110, 602, 904, 1300) zum Dekodieren digitaler Signale der Signale, die der kohärenten Erfassung unterzogen wurden, wobei

die Digitalsignalverarbeitungseinheit (110, 602, 904, 1300) umfasst: einen adaptiven Entzerrer (201, 201a, 201b) zum Durchführen einer Entzerrung mit mehreren Eingängen und einem Ausgang, eine Phasenkompensationseinheit (202) zum Kompensieren einer Phase eines Signals von dem adaptiven Entzerrer, eine Dekodiereinheit (203) zum Dekodieren des phasenkompensierten Signals, eine Niederfrequenzamplitudenverteilungsberechnungseinheit (701) zum Berechnen einer Niederfrequenzkomponente einer Amplitudenverteilung an einer Multicore-Fasereinfallsendfläche aus Filterkoeffizienten des adaptiven Entzerrers, und eine Fourier-Transformationseinheit (702, 1002) zum Berechnen einer Wellenfrontverzerrung durch Umwandeln der Amplitudenverteilung von der Niederfrequenzamplitudenverteilungsberechnungseinheit in eine Amplitudenverteilung an einem Eingang des fokussierenden optischen Systems, und

wobei der verformbare Spiegel (601) ausgelegt ist, einen Wellenfrontverzerrungskompensationsbetrag entsprechend der von der Fourier-Transformationseinheit ausgegebenen Wellenfrontverzerrung zu aktualisieren.

**3.** Empfänger für räumliche optische Kommunikation nach Anspruch 2, ferner umfassend:

einen Verteiler (901) zum Ausgeben des vom Teleskop ausgegebenen optischen Signals in eine erste und eine zweite Richtung;

einen Wellenfrontsensor (902) zum Erfassen der Wellenfrontverzerrung des in der ersten Richtung ausgegebenen optischen Signals;

den verformbaren Spiegel (601) zum Kompensieren einer Wellenfrontverzerrung des in der zweiten Richtung ausgegebenen optischen Signals;

und

eine Wellenfrontkompensationssteuereinheit (903) zum Steuern des verformbaren Spiegels und der digitalen Signalverarbeitungseinheit auf Grundlage der von dem Wellenfrontsensor erfassten Wellenfrontverzerrung, wobei

die Wellenfrontkompensationssteuereinheit (903) umfasst

eine Verformbarer-Spiegel-Steuereinheit (1001) zum Steuern des verformbaren Spiegels, um die von dem Wellenfrontsensor erfasste Wellenfrontverzerrung zu beseitigen, und eine Fourier-Transformationseinheit (1002) zum Berechnen einer Wellenfrontverzerrung, die in einem Ausgang des verformbaren Spiegels verbleibt, zum Umwandeln der Wellenfrontverzerrung in eine Amplitudenverteilung an einer einfallenden Endfläche der Multicore-Faser durch Durchführen einer Fourier-Transformation, und zum Ausgeben der Amplitudenverteilung, und

wobei die Digitalsignalverarbeitungseinheit (110, 602, 904, 1300) ferner eine Entzerrungskoeffizient-Anfangseinstellungseinheit (1102, 1102a) zum Einstellen von Anfangswerten von Entzerrungskoeffizienten des adaptiven Entzerrers auf Grundlage der von der Fourier-Transformationseinheit ausgegebenen Amplitudenverteilung umfasst.

4. Räumlicher optischer Kommunikationsempfänger nach Anspruch 3, wobei die Digitalsignalverarbeitungseinheit (110, 602, 904, 1300) eine Fehlerhafte-Konvergenz-Bestimmungseinheit (1301) zum Ausgeben eines fehlerhaften Konvergenzsignals an die Entzerrungskoeffizient-Anfangseinstellungseinheit aufweist, wenn ein Restwellenfrontverzerrungsbetrag von der Wellenfrontkompensationssteuereinheit mit Filterkoeffizienten des adaptiven Entzerrers verglichen und fehlerhafte Konvergenz des adaptiven Entzerrers erfasst wird, und wobei die Entzerrungskoeffizient-Anfangseinstellungseinheit die Anfangswerte des adaptiven Entzerrers einstellt, wenn das fehlerhafte Konvergenzsignal von der Fehlerhafte-Konvergenz-Bestimmungseinheit ausgegeben wird.

5. Räumlicher optischer Kommunikationsempfänger nach einem der Ansprüche 1 bis 4, wobei anstelle der Multicore-Faser ein Multicore-Faserverstärker verwendet wird.


## Revendications

1. Récepteur de communication optique spatiale comprenant :

un télescope (101) pour focaliser un signal optique propagé dans l'espace et délivrer le signal optique collimaté ;
un miroir de pointage (102) pour compenser un décalage angulaire du signal optique émis par le télescope ;
un système optique de focalisation (103) pour focaliser le signal optique provenant du miroir de pointage ;
une fibre multicoeur (104) dotée d'une pluralité de noyaux pour transmettre le signal optique focalisé ;
un diviseur (105) pour sortir les signaux optiques de chaque coeur transmis par la fibre multicoeur à travers différentes fibres monomodes pour chaque coeur;
des détecteurs cohérents (108) pour effectuer une détection cohérente sur les signaux optiques provenant de chaque fibre mono-mode ; et
une unité de traitement de signaux numériques (110, 602, 904, 1300) pour décoder les signaux numériques des signaux soumis à la détection cohérente, dans laquelle
l'unité de traitement de signaux numériques (110, 602, 904, 1300) inclut un égaliseur adaptatif (201, 201a, 201b) pour effectuer une égalisation à entrées multiples et à sortie unique, une unité de compensation de phase (202) pour compenser une phase d'un signal provenant de l'égaliseur adaptatif, une unité de décodage (203) pour décoder le signal compensé en phase, un moniteur de puissance (204) pour émettre une valeur surveillée de puissance correspondant à chacun des coeurs, et une unité de détection de décalage angulaire (205) pour émettre un signal de décalage angulaire indiquant une valeur du décalage angulaire du signal optique entré dans le système optique de focalisation en utilisant la valeur surveillée, et
dans lequel le miroir de pointage (102) est adapté pour mettre à jour un angle de compensation en correspondance avec le signal de décalage angulaire.

2. Récepteur de communication optique spatiale comprenant :

un télescope (101) pour focaliser un signal optique propagé dans l'espace et délivrer le signal optique collimaté ;
un miroir déformable (601) pour compenser la distorsion du front d'onde du signal optique émis par le télescope ;
un système optique de focalisation (103) pour focaliser le signal optique provenant du miroir déformable ;
une fibre multicoeur (104) dotée d'une pluralité de noyaux pour transmettre le signal optique focalisé ;
des détecteurs cohérents (108) pour effectuer une détection cohérente sur des signaux optiques de chaque coeur transmis par la fibre multicoeur à travers différentes fibres monomodes de chaque coeur ; et
une unité de traitement de signaux numériques (110, 602, 904, 1300) pour décoder les signaux numériques des signaux soumis à la détection cohérente, dans laquelle
l'unité de traitement de signaux numériques (110, 602, 904, 1300) inclut un égaliseur adaptatif (201, 201a, 201b) pour effectuer une égalisation à entrées multiples et à sortie unique, une unité de compensation de phase (202) pour compenser une phase d'un signal provenant de l'égaliseur adaptatif, une unité de décodage (203) pour décoder le signal compensé en phase, une unité de calcul de distribution d'amplitude à basse fréquence (701) pour calculer une composante à basse fréquence d'une distribution d'amplitude au niveau d'une face d'extrémité incidente de fibre multicoeur à partir de coefficients de filtre de l'égaliseur adaptatif, et une unité de transformation de Fourier (702, 1002) pour calculer une distorsion de front d'onde en convertissant la distribution d'amplitude provenant de l'unité de calcul de distribution d'amplitude à basse fréquence en une distribution d'amplitude au niveau d'une entrée du système optique de focalisation, et

dans lequel le miroir déformable (601) est adapté pour mettre à jour une quantité de compensation de distorsion de front d'onde de manière correspondante avec la sortie de distorsion de front d'onde de l'unité de transformation de Fourier.

3. Récepteur de communication optique spatiale selon la revendication 2, comprenant en outre :

un distributeur (901) pour délivrer le signal optique émis par le télescope dans une première direction et une seconde direction ;

un capteur de front d'onde (902) pour détecter une distorsion de front d'onde de la sortie de signal optique dans la première direction ;

le miroir déformable (601) pour compenser la distorsion du front d'onde de la sortie du signal optique dans la seconde direction ;

et

une unité de commande de compensation de front d'onde (903) pour commander le miroir déformable et l'unité de traitement de signaux numériques sur la base de la distorsion de front d'onde détectée par le capteur de front d'onde, dans lequel

l'unité de commande de compensation de front d'onde (903) inclut

une unité de commande de miroir déformable (1001) pour commander le miroir déformable afin d'annuler la distorsion de front d'onde détectée par le capteur de front d'onde, et une unité de transformation de Fourier (1002) pour calculer la distorsion de front d'onde restant dans une sortie du miroir déformable, convertir la distorsion de front d'onde en une distribution d'amplitude au niveau d'une face d'extrémité incidente de la fibre multicoeur en effectuant une transformation de Fourier, et émettre la distribution d'amplitude, et

l'unité de traitement de signaux numériques (110, 602, 904, 1300) inclut en outre une unité de réglage initial de coefficient d'égalisation (1102, 1102a) pour régler des valeurs initiales des coefficients d'égalisation de l'égaliseur adaptatif sur la base de la distribution d'amplitude fournie par l'unité de transformation de Fourier.

4. Récepteur de communication optique spatiale selon la revendication 3, dans lequel l'unité de traitement de signal numérique (110, 602, 904, 1300) inclut une unité de détermination de convergence erronée (1301) pour délivrer un signal de convergence erronée à l'unité de réglage initial de coefficient d'égalisation lors de la comparaison d'une quantité de distorsion de front d'onde résiduelle provenant de l'unité de commande de compensation de front d'onde avec les coefficients de filtre de l'égaliseur adaptatif et la détection d'une convergence erronée de l'égaliseur adaptatif, et l'unité de réglage initial de coefficient d'égalisation définit les valeurs initiales de l'égaliseur adaptatif lorsque le signal de convergence erronée est émis par l'unité de détermination de convergence erronée.

5. Récepteur de communication optique spatiale selon l'une quelconque des revendications 1 à 4, dans lequel un amplificateur à fibre multicoeur est utilisé à la place de la fibre multicoeur.

# FIG. 1

# FIG. 2

# FIG. 3

# FIG. 4

Start

Focus And
Collimate Optical Signal ∼ST101

Compensate For Angle Shift
Of Optical Signal ∼ST102

Focus Optical Signal ∼ST103

Propagate In MCF ∼ST104

Split For Each Of Cores ∼ST105

Cause Interference With
Local Light And
Perform Coherent Detection ∼ST106

Convert To Digital Signal ∼ST107

Perform Synthesis
By MISO Equalization ∼ST108

Monitor Power
For Each Of Cores ST111

Perform Phase Difference
Compensation ∼ST109

Detect Angular Error

ST112

Perform Determination
And Decoding ∼ST110

FIG. 5

# FIG. 6

# FIG. 7

To Deformable Mirror (DM)

# FIG. 8

```
              ( Start )
                 │
                 ▼
    ┌──────────────────────────┐
    │      Focus And           │ ～ST101
    │ Collimate Optical Signal │
    └──────────────────────────┘
                 │
                 ▼
    ┌──────────────────────────┐
    │      Compensate For      │ ～ST201
    │   Wavefront Distortion   │
    └──────────────────────────┘
                 │
                 ▼
    ┌──────────────────────────┐
    │   Focus Optical Signal   │ ～ST103
    └──────────────────────────┘
                 │
                 ▼
    ┌──────────────────────────┐
    │     Propagate In MCF     │ ～ST104
    └──────────────────────────┘
                 │
                 ▼
    ┌──────────────────────────┐
    │   Split For Each Of Cores│ ～ST105
    └──────────────────────────┘
                 │
                 ▼
    ┌──────────────────────────┐
    │ Cause Interference With  │ ～ST106
    │     Local Light And      │
    │ Perform Coherent Detection│
    └──────────────────────────┘
                 │
                 ▼
    ┌──────────────────────────┐
    │  Convert To Digital Signal│ ～ST107
    └──────────────────────────┘
                 │
                 ▼
    ┌──────────────────────────┐
    │     Perform Update Of    │ ～ST108a
    │ Synthesis Filter Coefficients│
    │     By MISO Equalization │
    └──────────────────────────┘
                 │
```

| Perform Phase Difference Compensation ～ST109 | Calculate Amplitude Distribution ～ST202 |
|---|---|
| Perform Determination And Decoding ～ST110 | Calculate Compensation Amount In DM ～ST203 |

24

# FIG. 9

# FIG. 10

From Wavefront Sensor (WFS)

903

Wavefront Compensation Control Unit

To Deformable Mirror (DM) ←

DM Control Unit ~1001

FT ~1002 → To DSP

# FIG. 11

904

DSP

201a      202      203

From ADC

Adaptive Equalizer (MISO)

Phase Compensation Unit

Decoding Unit

Rising Edge Detection Unit ~1101

From Wavefront Compensation Control Unit →

Equalization Coefficient Initial Setting Unit ~1102

# FIG. 12

```
                    ( Start )
                        |
                        v
          +---------------------------+
          |       Focus And           |~ST101
          | Collimate Optical Signal  |
          +---------------------------+
                 |                  |
                 v                  v
      +------------------+   +----------------------------+
      |  Compensate For  |   |  Detect Wavefront          |~ST301
      | Wavefront        |~ST201|  Distortion             |
      | Distortion       |   +----------------------------+
      +------------------+                |
                 |                        v
                 v             +----------------------------+
      +------------------+     |  Calculate Compensation    |~ST302
      | Focus Optical    |~ST103|  Amount In DM             |
      | Signal           |     +----------------------------+
      +------------------+                |
                 |                        v
                 v             +----------------------------+
      +------------------+     |  Calculate Amplitude       |~ST303
      | Propagate In MCF |~ST104|  Distribution In MCF      |
      +------------------+     +----------------------------+
                 |                        |
                 v<-----------------------+
      +------------------+
      | Split For Each   |~ST105
      | Of Cores         |
      +------------------+
                 |
                 v
      +------------------+
      | Cause Interference|
      | With Local Light  |~ST106
      | And Perform       |
      | Coherent Detection|
      +------------------+
                 |
                 v          ST304
            /\  DSP  /\
         <  Detects Input  > --NO-->
            \  Rising Edge /
                 |YES
                 v
      +------------------+
      | Set Initial      |~ST305
      | Values Of MISO   |
      | Equalizer        |
      +------------------+
                 |
                 v<----------------------+
      +------------------+
      | Perform Update Of |
      | Synthesis Filter  |~ST306
      | Coefficients By   |
      | MISO Equalization |
      +------------------+
                 |
                 v
      +------------------+
      | Perform Phase    |~ST109
      | Difference       |
      | Compensation     |
      +------------------+
                 |
                 v
      +------------------+
      | Perform          |~ST110
      | Determination    |
      | And Decoding     |
      +------------------+
```

# FIG. 13

1300

DSP

From ADC

Rising Edge Detection Unit — 1101

From Wavefront Compensation Control Unit

Adaptive Equalizer (MISO) — 201b

Phase Compensation Unit — 202

Decoding Unit — 203

Equalization Coefficient Initial Setting Unit — 1102a

Erroneous Convergence Determining Unit — 1301

# FIG. 14

```
                    ( Start )
                        │
                        ▼
        ┌─────────────────────────┐
        │      Focus And          │~ST101
        │ Collimate Optical Signal│
        └─────────────────────────┘
                        │                    ┌──────────────────────────┐
                        ▼                    ▼                          │
        ┌─────────────────────────┐    ┌──────────────────────────┐
        │      Compensate For     │~ST201  │ Detect Wavefront Distortion │~ST301
        │   Wavefront Distortion  │    └──────────────────────────┘
        └─────────────────────────┘                  │
                        │                             ▼
                        ▼                    ┌──────────────────────────┐
        ┌─────────────────────────┐    │ Calculate Compensation   │~ST302
        │   Focus Optical Signal  │~ST103  │     Amount In DM         │
        └─────────────────────────┘    └──────────────────────────┘
                        │                             │
                        ▼                             ▼
        ┌─────────────────────────┐    ┌──────────────────────────┐
        │     Propagate In MCF    │~ST104  │   Calculate Amplitude    │~ST303
        └─────────────────────────┘    │  Distribution In MCF     │
                        │              └──────────────────────────┘
                        ◄─────────────────────────────┘
                        ▼
        ┌─────────────────────────┐
        │   Split For Each Of Cores │~ST105
        └─────────────────────────┘
                        │
                        ▼
        ┌─────────────────────────┐
        │  Cause Interference With │~ST106
        │    Local Light And       │
        │ Perform Coherent Detection│
        └─────────────────────────┘
                        │           ST401
                        ▼
               ╱─────────────────╲
              ╱       DSP          ╲
             ╱  Detects Input Rising ╲    NO
            ◄  Edge Or Detect Erroneous ────────────┐
             ╲    Convergence       ╱               │
              ╲─────────────────╱                   │
                        │ YES                        │
                        ▼                            │
        ┌─────────────────────────┐             │
        │    Set Initial Values   │~ST305        │
        │    Of MISO Equalizer    │             │
        └─────────────────────────┘             │
                        │◄──────────────────────────┘
                        ▼
        ┌─────────────────────────┐
        │    Perform Update Of     │~ST306
        │ Synthesis Filter Coefficients│
        │    By MISO Equalization  │
        └─────────────────────────┘
                        │
                        ▼
        ┌─────────────────────────┐
        │ Perform Phase Difference │~ST109
        │      Compensation        │
        └─────────────────────────┘
                        │
                        ▼
        ┌─────────────────────────┐
        │  Perform Determination   │~ST110
        │      And Decoding        │
        └─────────────────────────┘
                        │
                        └──────────┐
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017141854 A1

- US 2016013880 A1

**Non-patent literature cited in the description**

- **MALCOLM W. WRIGHT et al.** Adaptive optics correction into single mode fiber for a low Earth orbiting space to ground optical communication link using the OPALS downlink. *Optics Express,* vol. 23 (26), 33705-33712